# EUROPÄISCHE PATENTSCHRIFT

(11) **EP 3 205 496 B1**
(45) Veröffentlichungstag und Bekanntmachung des Hinweises auf die Patenterteilung: **21.08.2019**
(21) Anmeldenummer: 16155313.6
(22) Anmeldetag: 11.02.2016
(51) Int. Cl.: B32B 21/02, B32B 21/06, B32B 21/14

(54) **VERBUNDPLATTE AUS HOLZWERKSTOFF MIT EINER MITTELLAGE AUS SPERRHOLZ**
COMPOSITE BOARD MADE OF A WOODEN MATERIAL WITH A CENTRAL LAYER MADE OF PLYWOOD
PLAQUE COMPOSITE EN MATERIAU DERIVE DU BOIS COMPRENANT UN PALIER INTERMEDIAIRE EN CONTREPLAQUE

(43) Veröffentlichungstag der Anmeldung: 16.08.2017
(73) Patentinhaber: SWISS KRONO Tec AG, 6004 Luzern (CH)
(72) Erfinder: BRAUN, Roger, 6130 Willisau (CH); Hofer, Josef, 6048 Horw (CH)
(74) Vertreter: Kalkoff & Partner

(56) Entgegenhaltungen:
- DE-B4- 10 300 247
- DE-T2- 69 931 251
- US-A- 5 925 211

## Beschreibung

Die Erfindung betrifft eine Verbundplatte aus Holzwerkstoff mit einer Mittellage aus Sperrholz, die möglichst gute Festigkeitseigenschaften aufweisen soll. Gleichzeitig soll die Oberfläche der Verbundplatte zum Aufbringen von dekorativen Beschichtungen geeignet sein.

Verbundplatten aus Holzwerkstoff, die für schwere Lasten geeignet sind und die mit dekorativen Oberflächenbeschichtungen versehen werden können, werden zum Beispiel als PremiumBoard MFP Hybrid von Pfleiderer angeboten (Pfleiderer, Prospekt PremiumBoard MFP Hybrid, veröffentlicht 10/2013). Eine vergleichbare Platte bietet FINSA unter der Bezeichnung superPan an. Egger bietet die Combiline-Platte an. Bei allen diesen Platten handelt es sich um Verbundplatten aus Holzwerkstoff, die eine Mittellage aus Spanplatten oder OSB-Platte (OSB = Oriented Strand Board) aufweisen. Auf die Mittellage sind Außenlagen aus Faserplatte aufgeleimt, bei der Combiline-Platte von Egger werden sehr dünne MDF-Platten (MDF = mitteldichte Faserplatte) verwendet. Bei Pfleiderer erfolgt das Aufleimen mittels Polyvinylacetat-Leim. Diese Platten werden angeboten zur Verwendung als tragende Möbelbau-Platten, Regalböden, aber auch für Konstruktionszwecke, vor allem im Innenausbau. Die DE 103 00 247 B4 beschreibt eine OSB-Platte mit aufgeleimtem Furnier.

Diese gattungsgemäßen Verbundplatten weisen für die angedachten Einsatzgebiete bereits brauchbare Festigkeitseigenschaften auf, beispielsweise eine Biegefestigkeit von ca. 28 N/mm², eine Querzugfestigkeit von 0,5 N/mm² und eine Abhebefestigkeit von 0,8 N/mm² für eine 16 mm starke Platte mit einer mittleren Rohdichte von 830 kg/m³ (Pfleiderer, Prospekt PremiumBoard MFP Hybrid, veröffentlicht 10/2013). Die Festigkeit dieser bekannten Verbundplatte wird durch die Kräfte limitiert, die die Leimfuge zwischen Mittellage und Außenlage aufnehmen kann. Aber auch eine stärkere Biegefestigkeit der Mittellage ist, insbesondere für konstruktive Anwendungen, erstrebenswert.

Die Herstellung der vorstehend beschriebenen Verbundplatte ist jedoch aufwändig, weil das vollflächige Beleimen der Platten operativ aufwändig ist und es technisch schwierig ist, eine gleichmäßige Verteilung des Leims auf der gesamten Oberfläche der zu verbindenden Mittellage bzw. Außenlage zu gewährleisten. Eine ungleichmäßige Verteilung des Leims führt zu einer stellenweise qualitativ schlechten Verleimung. Zudem bringt der zum Verbinden der Außenlage mit der Mittellage verwendete Leim erhebliche Mengen an Flüssigkeit sowohl in die Mittellage als auch in die Außenlage ein, so dass ein Verformen der Mittellage bzw. der Außenlage während des Abbindens des Leims verhindert werden muss.

Es ist daher Aufgabe der Erfindung, eine preisgünstig herstellbare, hoch belastbare Verbundplatte aus Holzwerkstoff mit guten Festigkeitseigenschaften vorzuschlagen.

Die Lösung der Aufgabe erfolgt mit einer Verbundplatte aus Holzwerkstoff gemäß Anspruch 1 sowie einem Verfahren zum Herstellen einer Verbundplatte aus Holzwerkstoff nach Anspruch 11.

Wesentliches Merkmal der Erfindung ist es, dass ein kunstharzgetränkte Papier zwischen der Mittellage und mindestens einer Außenlage eingesetzt wird. Das kunstharzgetränkte Papier wird vorliegend also - anders als üblich - nicht auf der Außenseite einer Verbundplatte angeordnet sondern im Randbereich unmittelbar unter der Außenlage einer erfindungsgemäßen Verbundplatte. Das kunstharzgetränkte Papier verbindet die Mittellage und die mindestens eine Außenlage miteinander. Bevorzugt ist eine Mittellage, die auf jeder ihrer beiden Oberflächen (Oberseite und Unterseite der Mittellage) über ein kunstharzgetränkte Papier mit einer Außenlage verbunden ist. Dabei besteht die Mittellage aus einer Sperrholzplatte. Es kann jegliches Sperrholz eingesetzt werden, wobei Sperrholz mit hoher Biegefestigkeit bevorzugt ist, z. B. Sperrholz aus Birke oder Buchen, aber auch Sperrholz aus Pappel oder aus tropischen Hölzern wie Lauan oder Meranti ist geeignet. Geeignet sind sowohl Sperrholzplatten aus Lagen ungleicher Stärke oder Multiplexplatten mit Lagen gleicher Stärke Die Außenlage ist bevorzugt aus mitteldichter oder hochdichter Faserplatte (MDF oder HDF) hergestellt. Besonders bevorzugt ist die Außenlage aus einer Faserplatte mit einer Dickte von 1.000 kg/m³ oder mehr hergestellt. Die maximale Dichte, die für Faserplatten derzeit technisch herstellbar ist, beträgt 1.300 kg/m³. Nach einer vorteilhaften Ausführung der Erfindung ist die Außenlage eingefärbt, insbesondere dunkel eingefärbt. Die Dicke der Außenlage beträgt vorzugsweise 1 mm bis 9 mm, besonders bevorzugt 1,5 mm bis 6 mm.

Das kunstharzgetränkte Papier besteht aus einer Papierbahn, meist mit den Abmessungen der zu verbindenden Mittellage oder Außenlage, wobei die Papierbahn mit einem flüssigen Kunstharz getränkt und anschließend getrocknet wird. Die Papierbahn selbst als Rohpapier ohne Kunstharz weist bevorzugt ein Flächengewicht von 15 g/m² bis 100 g/m ² auf. Das Papier ist aus wirtschaftlichen Gründen vorzugweise ungefärbt und unbedruckt, da das Papier nach dem Aufbringen der Außenlage nicht mehr sichtbar ist. Das Kunstharz, das zum Tränken der Platte eingesetzt wird, ist bevorzugt ausgewählt aus der Gruppe, die umfasst: Harnstoff, Melamin, Phenol-Formaldehydharz oder es werden Kombinationen der vorgenannten Kunstharze, sogenannte Mischharze oder Derivate eingesetzt. Für besondere Anwendungen sind auch Hightech Harze, wie z.B. Epoxydharze möglich, die jedoch aufgrund der Kosten nur sehr selten eingesetzt werden.

Das Kunstharz wird nach dem Tränken des Papiers getrocknet, aber nicht ausgehärtet. Es wird vorteilhaft eingesetzt in einer Menge von 30 g/m ² bis 200 g/m ², bevorzugt in einer Menge von 30 g/m² bis 120 g/m², vorteilhaft in einer Menge von 50 g/m² bis 100 g/m².

Um die Vorteile der erfindungsgemäßen Verbundplatte zu realisieren, genügt es nach einer einfachen Ausführung, wenn das Papier mit Kunstharz getränkt wird. Ein Additiv, das dem Papier oder dem Kunstharz jedoch vorteilhaft beigegeben werden kann, ist eine Substanz, die das Entflammen oder das Brennen der Verbundplatte erschwert oder verhindert. Solche Substanzen sind an sich bekannt, es handelt sich häufig um Monoammoniumphosphatverbindungen. Da das kunstharzgetränkte Papier nahe der Oberfläche der Verbundplatte angeordnet ist, kann es das Brennen der Verbundplatte wirksam verhindern. Additive, die bekannten kunstharzgetränkten Papieren üblicherweise beigegeben werden, wie zum Beispiel Korund, sind zur Herstellung einer Verbundplatte aus Holzwerkstoff mit verbesserten Festigkeitseigenschaften nicht erforderlich. Sie können aus Gründen der Wirtschaftlichkeit ohne weiteres eingespart werden.

Den Einsatz von flüssig aufgetragenen Leim durch ein kunstharzgetränkte Papier zu ersetzen beseitigt Nachteile und bringt unerwartete Vorteile mit sich: das Ersetzen einer Flüssigkeit durch ein nicht-flüssiges, kunstharzgetränkte Papier vermeidet das unerwünschte Eintragen von Flüssigkeit, insbesondere Wasser, in die Mittellage und die Außenlagen. Bereits die verhältnismäßig geringen Wassermengen, die beim Aushärten einiger Leime freigesetzt werden, führen zu unerwünschter Quellung der Mittel- oder Außenlage und damit zum Eintrag von Spannungen in die Platte mit dem Resultat von unerwünschten Verformungen. Zudem wird ein ungleichmäßiger Auftrag von flüssigem Leim vermieden, da das kunstharzgetränkte Papier auch großflächig in gleichmäßig guter Qualität verfügbar ist. Das kunstharzgetränkte Papier kann in großflächigen Papierbahnen bereitgestellt werden, die dem Format der Mittellage und der Außenlagen entsprechen.

Als vorteilhaft ist anzusehen, dass ein Pressgut-Stapel aus mindestens einer Außenlage und einer Mittellage sowie einem zwischen Außenlage und Mittellage angeordneten, kunstharzgetränkten Papier in einer üblichen Kurztakt-Presse (KT-Presse) zu einer Verbundplatte verpresst werden kann. KT-Pressen sind übliche Betriebsausstattung zur Herstellung von laminierten Produkten oder Verbundplatten. Der Einsatz aufwändiger Beleimvorrichtungen entfällt. Bevorzugt wird ein Pressgut-Stapel zu einer Verbundplatte verpresst, der - von der Unterseite des Pressgut-Stapel gesehen - aus einer unteren Außenlage, einem unteren kunstharzgetränkten Papier, einer Mittellage, einem oberen kunstharzgetränkte Papier und einer oberen Außenlage besteht.

Die erfindungsgemäße Verbundplatte aus Holzwerkstoff mit einer Mittellage aus Sperrholz weist gegenüber bekannten Verbundplatten aus Holzwerkstoff weiter erheblich verbesserte Festigkeitseigenschaften auf. Gegenüber bekannten Verbundplatten aus Holzwerkstoff weist die erfindungsgemäße Verbundplatte jeweils um ca. 50 % gesteigerte Querzugfestigkeit, Biegebruchfestigkeit und Abhebefestigkeit auf. Dieser außergewöhnliche Zuwachs an Festigkeit ist darauf zurückzuführen, dass in dem durch einwirkende Kräfte besonders belasteten Randbereich der Verbundplatte, der sich von der Außenseite der Außenlage bis zur Oberfläche der Mittellage erstreckt, einwirkende Kräfte nicht mehr allein durch die Außenlage und eine Leimfuge aufgefangen werden müssen. Vielmehr zeigt sich, dass das kunstharzgetränkte Papier einen erheblichen Beitrag zur Festigkeitsverbesserung der erfindungsgemäßen Verbundplatte leistet, sowohl durch das Kunstharz, dass besonders gut an den Oberflächen der Außenlage und der Mittellage verankert ist und eine hohe Eigenfestigkeit aufweist, aber auch durch das Papier, das in der erfindungsgemäßen Verbundplatte auch als verstärkende Armierung aus Fasern zu sehen ist. Das kunstharzgetränkte Papier, das im Randbereich der erfindungsgemäßen Verbundplatte angeordnet ist, wirkt etwa wie ein Zugstab.

Aus der DE 103 00 247 B4 (Kronotec AG) ist es zwar bekannt, eine Spanplatten unter Verwendung eines kunstharzgetränkte Papiers mit einem Echtholz-Furnier zu beschichten. In diesem Zusammenhang wurde jedoch ein eingefärbtes Papier verwendet, um eine optisch ansprechende Oberfläche der mit Echtholz-Furnier versehenen Platte zu gewährleisten. Die Festigkeitseigenschaften der in der DE 103 00 247 B4 beschriebenen Platte werden nicht geprüft. Informationen über den Einfluss eines Kunstharz imprägniert Papiers auf die Festigkeitsentwicklung einer Verbundplatte finden sich nicht.

Die DE 103 00 247 B4 betrifft den Gegenstand der vorliegenden Erfindung daher nicht, denn vorliegend handelt es sich um eine Verbundplatte aus Holzwerkstoff, bei der nicht nur die Mittellage Sperrholz aufweist sondern auch die Außenlage aus Holzwerkstoff besteht, und wobei diese Verbundplatte auf das Erreichen hoher Festigkeiten hin optimiert ist. Die erfindungsgemäße Verbundplatte kann als Bau- und Konstruktionsplatte z. B. im Möbelbau, im Innenausbau, im Kulissenbau und für vergleichbare Verwendungen eingesetzt werden. Besteht der Anspruch, eine Verbundplatte aus Holzwerkstoff mit einer dekorativen Oberfläche zu verwenden, muss die Außenseite der erfindungsgemäßen Verbundplatte mit einer weiteren Beschichtung versehen werden.

Da das kunstharzgetränkte Papier ein preiswert verfügbares Produkt ist, dass in gleichmäßiger Qualität erhältlich ist, und da vorhandene Produktionsanlagen (KT-Presse) genutzt werden können, kann die erfindungsgemäße Verbundplatte kostengünstig hergestellt werden.

Die Verbindung zwischen der Mittellage und der mindestens einen Außenlage wird bevorzugt hergestellt, indem ein kunstharzgetränktes Papier zwischen der mindestens einem Außenlage und der Mittellage aus Sperrholz angeordnet wird. Insbesondere ist es vorteilhaft, einen Pressgut-Stapel zu einer erfindungsgemäßen Verbundplatte aus Holzwerkstoff zu verbinden, der aus einer unteren Außenlage, einem unteren kunstharzgetränkten Papier, einer Mittellage, einem oberen kunstharzgetränkten Papier und einer oberen Außenlage zusammengesetzt ist. Der Pressgut-Stapel wird z. B. mit üblichen Hilfsmitteln (Stapelgeräte, Trays, Klemmen) zusammengestellt und fixiert und in die KT-Presse verbracht. Dort wird der Pressgut-Stapel zwischen erhitzten Pressblechen verpresst. Während des Pressvorgangs verflüssigt sich das Kunstharz und härtet dann aus.

Dabei entstehen mechanische und vermutlich auch chemische Bindungen zur Oberfläche der Außenlage und der Mittellage, so dass Außenlage und Mittellage fest miteinander verbunden sind. Das Papier wird durch das Verflüssigen und Aushärten des Kunstharzes nicht beschädigt. Es bleibt eingebettet in der ausgehärteten Kunstharzschicht und nimmt insbesondere Zugbelastungen auf, die auf den Randbereich der erfindungsgemäßen Verbundplatte einwirken.

Die erfindungsgemäße Verbundplatte aus Holzwerkstoff weist außergewöhnlich gute Festigkeitseigenschaften auf. Dies ist zum einen auf die besonders feste Mittellage zurückzuführen, aber auch insbesondere darauf, weil im Randbereich der Verbundplatte nicht nur das kunstharzgetränkte Papier in erheblichem Maße zur Festigkeit der Verbundplatte beiträgt. Auch eine Außenlage aus Faserplatten-Werkstoff trägt in erheblichem Maße zu den hohen Festigkeitswerten bei, die für die erfindungsgemäße Verbundplatte gemessen werden. Die Außenlage der erfindungsgemäßen Verbundplatte ist unter dem Gesichtspunkt der maximalen Festigkeit ausgewählt aus Faserplatten. Faserplatten weisen keine dekorative Oberfläche auf. Nach einer bevorzugten Weiterbildung der Erfindung können die nach außen weisenden Oberflächen der Außenlage daher mit einer weiteren ein- oder mehrlagigen Beschichtung versehen sein. Die Beschichtung der nach außen weisenden Oberfläche einer Außenlage kann beispielsweise erfolgen durch mindestens eine Schicht Farbe, Lack, HPL (high pressure laminate), Furnier oder durch eine Kombination dieser Schichten, zum Beispiel Furnier und Lack.

Andere Werkstoffe, die einzeln oder in Kombination auf die Außenlage einer erfindungsgemäßen Verbundplatte aufgebracht werden können, sind z. B. Papier und Karton, insbesondere Tapete, Folie, Textilien wie z. B. Stoff oder Filz, Vinyl, Leder, Kork, Steinoberflächen, Metalle bzw. Metallfolien, Kunststoffbeschichtungen aus Polypropylen, Polyethylen oder Polyvinylacetat, keramische Beschichtungen wie Kacheln oder Keramik-Kunstharzgemische, Glas, beschreibbare Folien (Tafelfolie), magnetische Schichten, strahlungshemmende, z. B. bleihaltige Folien oder Platten, mineralische Gewebe, Gelege oder Vliese wie z. B. Basaltgewebe, das Kräfte aufnehmen kann. Auch Fasern oder Fasergemische können als Beschichtung auf die Außenlage einer erfindungsgemäßen Verbundplatte aufgebracht werden, z. B. organische Fasern wie Zellulosefasern, synthetische Fasern wie Kunststofffasern, oder anorganische Fasern wie Metall- oder Keramikfasern.

Die vorgenannten Beschichtungsmittel können, je nach Ausgestaltung, für ästhetische Zwecke eingesetzt werden, z. B. Stoff oder Tapete. Sie können aber auch der technischen Verbesserung dienen, wie z. B. Beschichtungen, die die Oberfläche magnetisieren, die strahlungshemmend wirken oder die die Festigkeitseigenschaften weiter verbessern.

Auch eine Kombination der vorgenannten Werkstoffe ist möglich, sowohl in der Weise, dass die Werkstoffe übereinander aufgebracht werden, z. B. wird auf die Platte zunächst eine strahlungshemmende Folie oder Platte aufgebracht, die dann mit einer dekorativen Folie aus Kunststoff oder Metall überzogen wird. Es ist aber auch möglich, die Außenlage der erfindungsgemäßen Verbundplatte abschnittsweise nebeneinander mit verschiedenen Werkstoffen zu beschichten, beispielsweise Leder und Kork nebeneinander aufzukleben, um eine bestimmte ästhetische Wirkung zu erreichen.

Aus der Kombination einer hochfesten Verbundplatte mit der einfachen Beschichtbarkeit zur weiteren Verbesserung der technischen und ästhetischen Eigenschaften der Platte ergibt sich, dass die erfindungsgemäße Verbundplatte besonders für anspruchsvolle Verwendungen, z. B. im Bereich der Laborausstattung oder im Bereich der Praxisausstattung einsetzbar ist.

Details der Erfindung werden im Folgenden anhand eines Ausführungsbeispiels näher erläutert. Es zeigen:

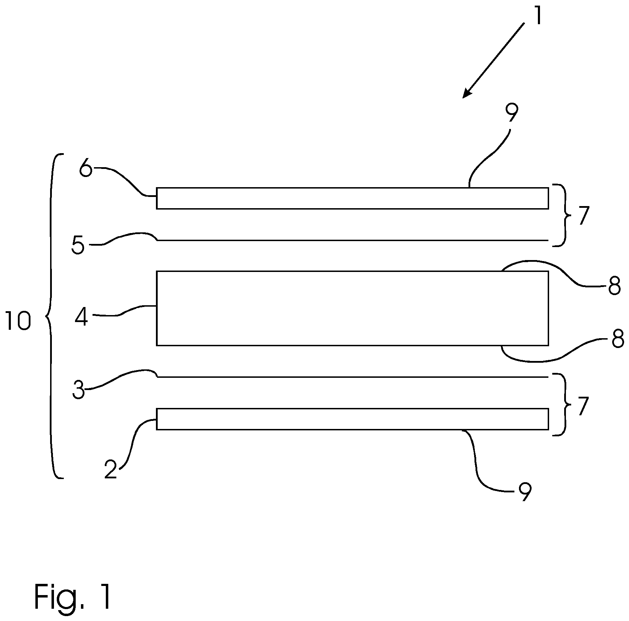

- Figur 1: eine schematische Darstellung des Aufbaus einer bevorzugten Ausführung der erfindungsgemäßen Verbundplatte aus Holzwerkstoff

Figur 1 zeigt in schematischer Darstellung die Schichten einer bevorzugten Ausführung der erfindungsgemäßen Verbundplatte 1 aus Holzwerkstoff mit einer unteren Außenlage 2, einem unteren kunstharzgetränkten Papier 3, einer Mittellage 4, einem oberen kunstharzgetränkten Papier 5 und einer oberen Außenlage 6 am Beispiel eines Pressgut-Stapels 10. Die untere und die obere Außenlage bestehen bei dem in Figur 1 dargestellten Ausführungsbeispiel aus 6 mm starker HDF-Platte mit einer Dichte von 1000 kg/m³ bis 1050 kg/m³, z. B. einer SWISSCDF Rohplatte. Die Außenlagen sind schwarz eingefärbt.

Unabhängig vom Ausführungsbeispiel ist jedoch festzuhalten, dass Material und Stärke der Außenlagen unabhängig voneinander gewählt werden können. Die untere und die obere Außenlage können also eine unterschiedliche Stärke aufweisen. Sie können auch aus unterschiedlichem Material gewählt werden.

Die Mittellage 4 besteht bei dem vorliegenden Ausführungsbeispiel aus einer 19 mm starken Birken-Sperrholzplatte. Zwischen den unteren und oberen Außenlagen 2, 6 und der Mittellage 4 ist jeweils ein unteres bzw. oberes kunstharzgetränkte Papier 3, 5 angeordnet. Das kunstharzgetränkte Papier ist hergestellt aus einem Rohpapier mit einem Blattgewicht von 27 g/m ² vor der Imprägnierung mit Kunstharz. Nach der Imprägnierung mit Kunstharz, hier: Harnstoff-Melamin, beträgt das Flächengewicht des Papiers 125 g/m ². Das Papier weist beim Verpressen mit den Außenlagen 2, 6 eine Feuchtigkeit von 7 % auf. Dieser Feuchtigkeitsgehalt entspricht in etwa der Restfeuchte der Außenlagen 2, 6 und der Mittellage 4, so dass während des Verpressens keine zusätzliche Feuchtigkeit in die Holzwerkstoffplatten der Außenlagen 2, 6 und der Mittellage 4 eingetragen wird.

Der in Figur 1 dargestellte Pressgut-Stapel 10 wird in einer KT-Presse, deren Pressenplatten auf 150 ° Celsius aufgeheizt sind, für 300 Sekunden verpresst. In dieser Zeit schmilzt das Kunstharz auf und härtet aus. Am Ende des Pressvorgangs ist eine Verbundplatte aus Holzwerkstoff mit einer Plattenstärke von insgesamt ca. 31 mm und einer mittleren Rohdichte gemäß EN 323 von ca. 900 kg/m ³ entstanden, für die folgende Festigkeitswerte gemessen wurden:

| | |
|---|---|
| Querzugfestigkeit (gemessen gemäß EN 319): | 0,75 N/mm ² |
| Biegefestigkeit (gemessen gemäß EN 310): | 45 N/mm ² |
| Abhebefestigkeit (gemessen gemäß EN 311): | 1,26 N/mm ² |

Die um überwiegend mehr als ca. 50 % verbesserten Festigkeitswerte der erfindungsgemäßen Verbundplatte aus Holzwerkstoff sind -neben dem Einsatz einer besonders festen Mittellage- möglicherweise wesentlich auf Verbesserungen im Randbereich 7 der Verbundplatte zurückzuführen, der sich aus dem kunstharzgetränkten Papier und einer Außenlage zusammensetzt; der sich also - alternativ formuliert - von der Oberfläche 8 der Mittellage 4 bis zur Außenseite 9 einer Außenlage erstreckt.

Bei der erfindungsgemäßen Verbundplatte 1 weist zum einen das verwendete Kunstharz sehr gute Festigkeitseigenschaften auf, weil es durch das Verpressen in der KT-Presse auch mechanisch sehr gut an der Oberfläche der Außenlage und der Mittellage verankert ist. Zum anderen ist das in das Kunstharz eingebettete Papier auch nach dem Verpressen des Pressgut-Stapels uneingeschränkt intakt und das Fasergeflecht der Papierbahn ist eine zusätzliche Komponente der erfindungsgemäßen Verbundplatte 1, die geeignet ist, Zugkräfte aufzunehmen.

Im Randbereich 7 der erfindungsgemäßen Verbundplatte treten bei von außen einwirkenden Druck- oder Zugkräften jeweils in dem zugbelasteten Randbereich der Verbundplatte 1 Zugkräfte auf. Die Aufnahme dieser Zugkräfte war bisher limitiert durch die Festigkeit der Leimfuge zwischen der Mittellage und einer Außenlage bekannter Verbundplatten aus Holzwerkstoff. Bei der erfindungsgemäßen Verbundplatte 1 ist nicht nur das Kunstharz in der Lage, hohe Zugkräfte aufzunehmen. Insbesondere auch die Fasern des Papiers sind in der Lage, hohe Zugkräfte aufzunehmen. Das untere und das obere kunstharzgetränkte Papier 3 ,5 wirkt insofern vergleichbar einem Zugstab, der im Randbereich 7 der Verbundplatte 1 angebracht ist.

Unabhängig vom vorliegenden Ausführungsbeispiel ist anzumerken, dass das kunstharzgetränkte Papier gegenüber dem bisher bekannten und üblichen Leimauftrag auf Außenlage und/oder Mittellage den Vorteil aufweist, dass das kunstharzgetränkte Papier Unebenheiten der Oberflächen von Außenlage und Mittellage besser ausgleichen kann, so das Schwachstellen in der Verbindung von Außenlage und Mittellage weit gehend ausgeschlossen sind, und dass Verbundplatte bereitgestellt werden, die eine gute Dimensionsstabilität und ebene Außenseiten aufweisen.

Eine erste Außenlage einer Verbundplatte wird mit quadratischen Abschnitten aus Leder und Kupferfolie beklebt, um eine ästhetische Oberfläche zu gestalten. Zu diesem Zweck können auch die weiteren, vorstehend in der Beschreibung genannten Werkstoffe eingesetzt werden. Eine zweite Außenlage einer Verbundplatte wird mit einer strahlungshemmenden Metallfolie aus Blei beklebt, auf die dann ein HPL-Laminat auflaminiert wird. Es entsteht eine technisch verbesserte und pflegeleichte Oberfläche.

## Patentansprüche

1. Verbundplatte aus Holzwerkstoff mit einer Mittellage (4) aus Sperrholz, wobei die Mittellage mit mindestens einer Außenlage (2, 6) aus Faserplatte verbunden ist, **dadurch gekennzeichnet, dass** zwischen Mittellage und Außenlage ein kunstharzgetränktes Papier (3, 5) angeordnet ist.

2. Verbundplatte nach Anspruch 1, **dadurch gekennzeichnet, dass** ein kunstharzgetränktes Papier (3, 5) eingesetzt wird, wobei das Blattgewicht des Papiers 15 g/m² bis 100 g/m² beträgt.

3. Verbundplatte nach Anspruch 1 oder 2, **dadurch gekennzeichnet, dass** das kunstharzgetränkte Papier (3, 5) Kunstharz in einer Menge von 30 g/m² bis 200 g/m² aufweist.

4. Verbundplatte nach mindestens einem der vorangehenden Ansprüche, **dadurch gekennzeichnet, dass** das kunstharzgetränkte Papier (3, 5) mit einem oder mehreren der Kunstharze getränkt ist, aus der Gruppe, die Harnstoff, Melamin, Formaldehyd, Phenolharz, Expoydharz sowie deren Mischungen und Derivate umfasst.

5. Verbundplatte nach mindestens einem der vorangehenden Ansprüche, **dadurch gekennzeichnet, dass** das kunstharzgetränkte Papier (3, 5) ein Additiv aufweist, dass ein Entflammen oder Brennen der Verbundplatte (1) erschwert oder verhindert.

6. Verbundplatte nach mindestens einem der vorangehenden Ansprüche, **dadurch gekennzeichnet, dass** die Mittellage (4) auf beiden Seiten mit einer Außenlage (2, 6) versehen ist.

7. Verbundplatte nach mindestens einem der vorangehenden Ansprüche, **dadurch gekennzeichnet, dass** die Außenlage (2, 6) eine Platte aus hochdichter oder aus mitteldichter Faserplatte aufweist.

8. Verbundplatte nach mindestens einem der vorangehenden Ansprüche, **dadurch gekennzeichnet, dass** die Außenlage (2, 6) eine Plattenstärke von 1 mm bis 9 mm, bevorzugt von 1 mm bis 6 mm aufweist.

9. Verbundplatte nach mindestens einem der vorangehenden Ansprüche, **dadurch gekennzeichnet, dass** auf die Außenseite (9) mindestens einer Außenlage (2, 6) der Verbundplatte (1) eine weitere Beschichtung aufgebracht ist.

10. Verbundplatte nach Anspruch 9, **dadurch gekennzeichnet, dass** als weitere Beschichtung auf die Außenseite (9) mindestens einer Außenlage (2, 6) eine Beschichtung aus der Gruppe aufgebracht ist, die einzeln oder in Kombination umfasst: Farbe, Lack, HPL oder Furnier, Papier, Karton, Tapete, Folie, Textilien, Stoff, Filz, Vinyl, Leder, Kork, Steinoberflächen, Metalle, Metallfolien, Kunststoffbeschichtungen, Polypropylen-, Polyethylen- oder Polyvinylacetatbeschichtungen, keramische Beschichtungen, Kacheln, Keramik-Kunstharzgemische, Glas, beschreibbare Folien, magnetische Beschichtungen, strahlungshemmende Folien oder Platten, mineralische Gewebe, organische, anorganische und synthetische Fasern.

11. Verfahren zum Herstellen einer Verbundplatte aus Holzwerkstoff mit einer Mittellage (4) aus Sperrholz, wobei die Mittellage mit mindestens einer Außenlage (2, 6) aus Faserplatte verbunden ist, **dadurch gekennzeichnet, dass** zwischen Mittellage und Außenlage ein kunstharzgetränktes Papier (3, 5) angeordnet ist, mit den Schritten:
- Zusammenstellen eines Pressgut-Stapels (10) aufweisend eine Mittellage (4), ein kunstharzgetränktes Papier (3, 5) und mindestens eine Außenlage (2, 6), wobei das kunstharzgetränkte Papier zwischen Mittellage und Außenlage eingefügt wird,
- Verpressen des Pressgut-Stapels (10) zu einer Verbundplatte (1).

12. Verfahren nach Anspruch 11, **dadurch gekennzeichnet, dass** das Verpressen des Pressgut-Stapels (10) unter Einwirkung von erhöhtem Druck und erhöhter Temperatur erfolgt.

13. Verfahren nach Anspruch 11 oder 12, **dadurch gekennzeichnet, dass** das Verpressen des Pressgut-Stapels (10) zu einer Verbundplatte (1) durch das Erweichen des Kunstharzes, mit dem das Papier getränkt ist, und das anschließende Verfestigen des Kunstharzes erfolgt.

## Claims

1. A composite board made of wood material with a middle layer (4) made of plywood, wherein the middle layer is connected to at least one outer layer (2, 6) made of fiberboard, **characterized in that** a synthetic resin-saturated paper (3, 5) is arranged between the middle layer and outer layer.

2. The composite board according to claim 1, **characterized in that** a synthetic resin-saturated paper (3, 5) is used, wherein the sheet weight of the paper is 15 g/m² to 100 g/m².

3. The composite board according to claim 1 or 2, **characterized in that** the synthetic resin-saturated paper (3, 5) has synthetic resin in an amount of 30 g/m² to 200 g/m².

4. The composite board according to at least one of the preceding claims, **characterized in that** the synthetic resin-saturated paper (3, 5) is saturated with one or more of the synthetic resins from the group comprising urea, melamine, formaldehyde, phenol resin, epoxide resin, and mixtures and derivatives thereof.

5. The composite board according to at least one of the preceding claims, **characterized in that** the synthetic resin-saturated paper (3, 5) has an additive that suppresses or prevents ignition or combustion of the composite board (1).

6. The composite board according to at least one of the preceding claims, **characterized in that** the middle layer (4) is provided on both sides with an outer layer (2, 6).

7. The composite board according to at least one of the preceding claims, **characterized in that** the outer layer (2, 6) has a board consisting of a highly dense or medium dense fiber board.

8. The composite board according to at least one of the preceding claims, **characterized in that** the outer layer (2, 6) has a board thickness of 1 mm to 9 mm, preferably 1 mm to 6 mm.

9. The composite board according to at least one of the preceding claims, **characterized in that** an additional coating is applied onto the outside (9) of at least one outer layer (2, 6) of the composite board (1).

10. The composite board according to claim 9, **characterized in that**, as additional coating on the outside (9) of at least one outer layer (2, 6), a coating from the group is applied that individually or in combination comprises: Paint, lacquer, HPL or veneer, paper, cardboard, wallpaper, film, textiles, fabric, felt, vinyl, leather, cork, rock surfaces, metals, metal foils, plastic coatings, polypropylene, polyethylene or polyvinyl acetate coatings, ceramic coatings, tiles, ceramic/synthetic resin mixtures, glass, writable films, magnetic coatings, radiation-inhibiting films or boards, mineral fabric, organic, inorganic and synthetic fibers.

11. A method for producing a composite board made of wood material with a middle layer (4) made of plywood, wherein the middle layer is connected to at least one outer layer (2, 6) made of fiberboard, **characterized in that** a synthetic resin-saturated paper (3, 5) is arranged between the middle layer and outer layer, comprising the steps:
- assembling a stack of pressed material (10) having a middle layer (4), a synthetic resin-saturated paper (3, 5) and at least one outer layer (2, 6), wherein the synthetic resin-saturated paper is inserted between the middle layer and outer layer,
- pressing the stack of pressed material (10) into a composite board (1).

12. The method according to claim 11, **characterized in that** the pressed stack of material (10) is pressed under the effect of elevated pressure and elevated temperature.

13. The method according to claim 11 or 12, **characterized in that** the stack of pressed material (10) is pressed into a composite board (1) by softening the synthetic resin with which the paper is saturated, and then consolidating the synthetic resin.

## Revendications

1. Plaque composite en matériau dérivé du bois comprenant une couche intermédiaire (4) en contre-plaqué, dans laquelle la couche intermédiaire est reliée à au moins une couche extérieure (2, 6) constituée d'une plaque de fibres, **caractérisée en ce qu'**un papier imbibé de résine synthétique (3, 5) est disposé entre la couche intermédiaire et la couche extérieure.

2. Plaque composite selon la revendication 1, **caractérisée en ce qu'**un papier imbibé de résine synthétique (3, 5) est utilisé, le poids du papier sous forme de feuille étant compris entre 15 g/m² et 100 g/m².

3. Plaque composite selon la revendication 1 ou 2, **caractérisée en ce que** le papier imbibé de résine synthétique (3, 5) présente de la résine synthétique en une quantité de 30 g/m² à 200 g/m².

4. Plaque composite selon l'une au moins des revendications précédentes, **caractérisée en ce que** le papier imbibé de résine synthétique (3, 5) est imbibé d'une ou plusieurs résines synthétiques parmi le groupe comportant de l'urée, de la mélamine, du formaldéhyde, de la résine phénolique, de la résine époxy, ainsi que des mélanges et dérivés de ceux-ci.

5. Plaque composite selon l'une au moins des revendications précédentes, **caractérisée en ce que** le papier imbibé de résine synthétique (3, 5) présente un adjuvant destiné à gêner ou empêcher une inflammation ou une combustion de la plaque composite (1).

6. Plaque composite selon l'une au moins des revendications précédentes, **caractérisée en ce que** la couche intermédiaire (4) est pourvue d'une couche extérieure (2, 6) sur les deux côtés.

7. Plaque composite selon l'une au moins des revendications précédentes, **caractérisée en ce que** la couche extérieure (2, 6) présente une plaque constituée d'une plaque de fibres de densité élevée ou de densité moyenne.

8. Plaque composite selon l'une au moins des revendications précédentes, **caractérisée en ce que** la couche extérieure (2, 6) présente une épaisseur de plaque de 1 mm à 9 mm, de préférence de 1 mm à 6 mm.

9. Plaque composite selon l'une au moins des revendications précédentes, **caractérisée en ce qu'**un revêtement supplémentaire est appliqué sur le côté extérieur (9) d'au moins une couche extérieure (2, 6) de la plaque composite (1).

10. Plaque composite selon la revendication 9, **caractérisée en ce que** le revêtement supplémentaire appliqué sur le côté extérieur (9) d'au moins une couche extérieure (2, 6) est un revêtement parmi le groupe comportant, individuellement ou de façon combinée : une peinture, un vernis, un HPL ou un placage, le papier, le carton, la tapisserie, une feuille, des textiles, le tissu, le feutre, le vinyle, le cuir, le liège, des surfaces de pierre, des métaux, des feuilles métalliques, des revêtements synthétiques, des revêtements en polypropylène, en polyéthylène ou en polyvinyle acétate, des revêtements céramiques, des carrelages, des mélanges de céramique et de résine synthétique, le verre, des feuilles inscriptibles, des revêtements magnétiques, des feuilles ou des plaques inhibant le rayonnement, des textiles minéraux, des fibres organiques, inorganiques et synthétiques.

11. Procédé pour la fabrication d'une plaque composite en matériau dérivé du bois comprenant une couche intermédiaire (4) en contre-plaqué, dans lequel la couche intermédiaire est reliée à au moins une couche extérieure (2, 6) constituée d'une plaque de fibres, **caractérisé en ce qu'**un papier imbibé de résine synthétique (3, 5) est disposé entre la couche intermédiaire et la couche extérieure, avec les étapes suivantes :
- assemblage d'une pile de matière à presser (10) présentant une couche intermédiaire (4), un papier imbibé de résine synthétique (3, 5) et au moins une couche extérieure (2, 6), le papier imbibé de résine synthétique étant inséré entre la couche intermédiaire et la couche extérieure,
- pressage de la pile de matière à presser (10) de manière à obtenir une plaque composite (1).

12. Procédé selon la revendication 11, **caractérisé en ce que** le pressage de la pile de matière à presser (10) est réalisé sous l'action d'une pression plus élevée et d'une température plus élevée.

13. Procédé selon la revendication 11 ou 12, **caractérisé en ce que** le pressage de la pile de matière à presser (10) de manière à obtenir une plaque composite (1) est réalisé par ramollissement de la résine synthétique avec laquelle le papier est imbibé, et par durcissement consécutif de la résine synthétique.
